# EUROPÄISCHE PATENTSCHRIFT

(11) **EP 1 109 024 B1**
(45) Veröffentlichungstag und Bekanntmachung des Hinweises auf die Patenterteilung: **28.02.2007**
(21) Anmeldenummer: 00124935.8
(22) Anmeldetag: 15.11.2000
(51) Int. Cl.: G01P 3/489, G08C 19/02, G08C 19/16, G08C 15/00

(54) **Verfahren zur Kommunikation mit einem eingebauten Sensor, insbesondere einem Drehzahlsensor**
Method for communication with a built-in sensor, in particular a rotational speed sensor
Méthode pour la communication avec un capteur intégré, en particulier un capteur de vitesse angulaire

(30) Priorität: 19.11.1999 DE 19955758
(43) Veröffentlichungstag der Anmeldung: 20.06.2001
(73) Patentinhaber: Infineon Technologies AG, 81669 München (DE)
(72) Erfinder: Draxelmayr, Dieter, Dr., 9500 Villach (AT)
(74) Vertreter: Ginzel, Christian

(56) Entgegenhaltungen:
- EP-A- 0 101 528
- DE-A- 2 521 388
- DE-A- 3 615 463
- DE-A- 19 511 140
- DE-A- 19 634 714

## Beschreibung

Die vorliegende Erfindung betrifft ein Verfahren zur Kommunikation mit einem eingebauten Sensor, insbesondere einem Drehzahlsensor, der als Ausgangssignal aufeinanderfolgende Signalimpulse liefert, wobei der Sensor vorzugsweise in einem Kraftfahrzeug derart eingebaut ist, daß er über eine Spannungsversorgungsleitung mit einer Versorgungsspannung von extern versorgbar ist.

Obwohl auf beliebige Sensoren anwendbar, werden die vorliegende Erfindung sowie die ihr zugrundeliegende Problematik anhand eines Drehzahlsensors erläutert, der als Ausgangssignal aufeinanderfolgende logische L- und H-Signalimpulse liefert.

Im Stand der Technik sind verschiedene Drehzahlsensoren bekannt, welche die Umdrehungen eines Rades detektieren können sollen. Beispielsweise ist ein Sensor mit einem Zahrad bekannt, bei dem die Zähne und Lücken des Zahnrades in logische H=HIGH- bzw. L=LOW-Zustände umgesetzt werden. Im Falle einer bekannten Zweidraht-Stromschnittstelle erfolgt die Ausgabe dieser Zustände dermaßen, daß jedem Zustand eine bestimmte Stromaufnahme zugeordnet ist. Damit kann man die beiden Versorgungsleitungen gleichzeitig auch als Signalausgangsleitungen verwenden.

Ebenfalls bekannt ist ein Drehzahlsensor mit einer Dreidraht-Spannungsschnittstelle. Auch hier kann man die drei Versorgungsleitungen gleichzeitig auch als Signalausgangsleitungen verwenden.

Allerdings kann man bei derartigen Sensoren nicht ohne weiteres feststellen, wie betriebssicher er arbeitet. Je nach Einbauort kann er ein sehr großes oder ein sehr kleines Eingangssignal erhalten. Zur Kontrolle des mechanischen Zusammenbaus hätte man gerne noch ein Zusatzsignal, das eine Aussage über die Größe des Gebersignals ermöglicht.

Allgemeiner gesagt ist der Sensor in der Regel im Kraftfahrzeug an einer unzugänglichen Stelle eingebaut, so daß eine direkte Kommunikation mit der dazugehörigen integrierten intellegenten Schaltung nicht möglich ist. Lediglich die Versorgungsleitungen des Drehzahlsensors sind nach dem Einbau frei zugänglich.

Als nachteilhaft bei dem obigen bekannten Ansatz hat sich also die Tatsache herausgestellt, daß eine Programmierung bzw. Abfrage für eine Auslesung des Sensors im eingebauten Zustand nicht mehr möglich ist.

Daher wurde vorgeschlagen, daß der Sensor digitale Ausgangsdaten in einem bestimmten Protokoll sendet, das in einem bestimmten Reservebit die Überschreitung einer bestimmten Eingangssignalgröße signalisieren kann. Generell wäre es wünschenswert, auf diese Art und Weise gleich die komplette Information über das Eingangssignal auszugeben, allerdings ist das Protokoll aus Gründen der Störsicherheit relativ einfach und langsam.

Die DE 196 34 714 beschreibt ein Verfahren zur Kommunikation zwischen einem Kraftfahrzeug-Regelungssystem und einem aktiven Sensor, z.B. einem Drehzahlsensor. Dabei werden bei einem Ausführungsbeispiel Daten zwischen dem Regelungssystem und dem Sensor lediglich im unidirektionalen Betrieb übertragen. Gemäß einem anderen Ausführungsbeispiel können Daten zwischen dem Regelungssystem und dem Sensor im Halbduplexverfahren in beiden Übertragungsrichtungen übertragen werden.

Die DE 25 21 388 beschreibt ein Verfahren zur Übertragung digitaler Daten mittels modulierter Versorgungsspannung. Aufgabe ist es dabei, eine große Anzahl von Sensoren zur Prozeßüberwachung und -steuerung in einer Industrieanlage mit möglichst geringem Verdrahtungsaufwand mit einer Leitstelle zu verbinden.

Die DE 36 15 463 beschreibt eine Anordnung zur Signalübertragung in einer Meßanordnung, bei der ein Meßumformer mit einem Auswertegerät über eine Zweidrahtleitung verbunden ist. Dabei ist eine bi-direktionale Kommunikation zwischen dem Meßumformer und dem Auswertegerät möglich.

Die EP 0 101 528 beschreibt ein Datenkommunikationssystem mit einer Zweidrahtleitung, bei dem der Strom zwischen 4 und 20 mA geschaltet werden kann, um durch diese Strompulse den Wert einer Prozeßgröße zu repräsentieren.

Die DE 195 11 140 beschreibt eine Vorrichtung zum seriellen Datenaustausch zwischen zwei Stationen, bei der vier verschiedene Spannungspegel auf einer Datenübertragungsleitung erzeugt werden können, um so eine bi-direktionale Datenübertragung zu ermöglichen.

Daher ist es Aufgabe der vorliegenden Erfindung, ein Verfahren zur Kommunikation mit dem eingangs genannten Sensor zu schaffen, wobei eine Programmierung bzw. Abfrage für eine Auslesung des Sensors im eingebauten Zustand möglich ist, ohne daß die Betriebssicherheit herabgesetzt ist.

### VORTEILE DER ERFINDUNG

Die der vorliegenden Erfindung zugrundeliegende Idee besteht darin, daß folgende Schritte nach Versetzen des Drehzahlsensors in einen Erfassungsmodus durchgeführt werden: Vorsehen einer externen Modulation der Versorgungsspannung auf der Spannungsversorgungsleitung; Analysieren der im Sensor empfangenen modulierten Versorgungsspannung hinsichtlich der Erfüllung eines im Sensor gespeicherten vorbestimmten Kriteriums; und Interpretieren der empfangenen modulierten Versorgungsspannung als externes Kommunikationssignal, falls das Kriterium erfüllt ist. -

Das erfindungsgemäße Verfahren mit den Merkmalen des Anspruchs 1 weist gegenüber den bekannten Lösungsansätzen den besonderen Vorteil auf, daß eine Programmierung bzw. Abfrage für eine Auslesung des Sensors im eingebauten Zustand möglich ist, ohne daß die Betriebssicherheit herabgesetzt ist. Insbesondere kann man dem Sensor den Wunsch nach einem Testmode signalisieren, der eine weitgehende Störunempfindlichkeit besitzt.

In den Unteransprüchen finden sich vorteilhafte Weiterbildungen und Verbesserungen des in Anspruch 1 angegebenen Verfahrens.

Gemäß einer bevorzugten Weiterbildung ist der Drehzahlsensor über eine Zweidraht-Stromschnittstelle von extern versorgbar. Die im Drehzahlsensor empfangene modulierte Versorgungsspannung wird mit dem zugehörigen Sensorstrom verglichen, und die empfangene modulierte Versorgungsspannung wird als externes Kommunikationssignal interpretiert, falls eine negative Widerstandscharakteristik festgestellt wird.

Gemäß einer weiteren bevorzugten Weiterbildung schaltet der Drehzahlsensor in einen Kommunikationsmodus, falls eine negative Widerstandscharakteristik über eine vorbestimmte Antahl von Zyklen der L-/H-Signalimpulse festgestellt wird.

Gemäß einer weiteren bevorzugten Weiterbildung wird in dem Kommunikationsmodus jede Modulation der Versorgungsspannung als externes Kommunikationssignal interpretiert, welche vorbestimmte Signaldauer und Signalgröße hat.

Gemäß einer weiteren bevorzugten Weiterbildung entspricht eine logische "1" einem H-Impuls mit 2/3 Periodendauer und einem L-Impuls mit 1/3 Periodendauer.

Gemäß einer weiteren bevorzugten Weiterbildung entspricht eine logische "0" einem H-Impuls mit 1/3 Periodendauer und einem L-Impuls mit 2/3 Periodendauer.

Gemäß einer weiteren bevorzugten Weiterbildung sendet der Drehzahlsensor in dem Kommunikationsmodus Kommunikationssignale auf der Spannungsversorgungsleitung nach extern.

Gemäß einer weiteren bevorzugten Weiterbildung wird die Versorgungsspannung im Falle keiner Kommunikation im wesentlichen konstant gehalten.

Gemäß einer weiteren bevorzugten Weiterbildung ist der Drehzahlsensor über eine Dreidraht-Spannungsschnittstelle von extern versorgbar.

Gemäß einer weiteren bevorzugten Weiterbildung sendet der Drehzahlsensor in dem Kommunikationsmodus Kommunikationssignale auf der Spannungsausgangsleitung nach extern. ZEICHNUNGEN

Ein Ausführungsbeispiel der Erfindung ist in den Zeichnungen dargestellt und in der nachfolgenden Beschreibung näher erläutert.

Es zeigen:
- Fig. 1: eine schematische Darstellung einer bekannten Drehzahlsensorschaltung mit einer Zweidraht-Stromschnittstelle;
- Fig. 2: eine schematische Darstellung einer weiteren bekannten Drehzahlsensorschaltung mit einer Dreidraht-Spannungsschnittstelle;
- Fig. 3: eine zeitliche Darstellung von Signalgrößen der Schaltung nach Fig. 1, und zwar Fig. 3a) für den bekannten Meßmodus und Fig. 3b) zur Illustration der Umschaltung in den Kommunikationsmodus; und
- Fig. 4: eine Darstellung der übertragenen Signalimpulse bei einer Ausführungsform des erfindungsgemäßen Verfahrens.

### BESCHREIBUNG DER AUSFÜHRUNGSBEISPIELE

In den Figuren bezeichnen gleiche Bezugszeichen gleiche oder funktionsgleiche Bestandteile.

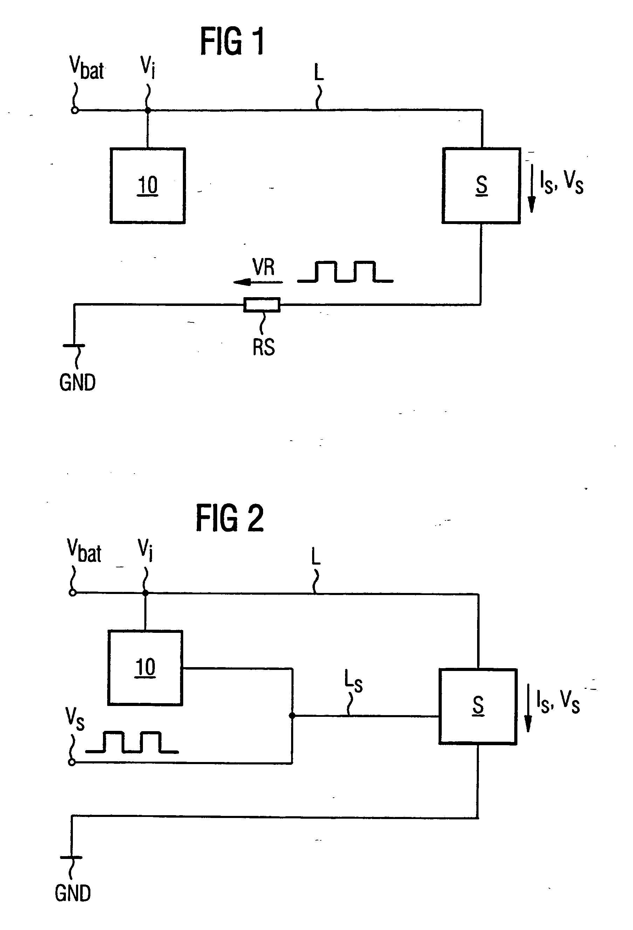

Fig. 1 zeigt eine schematische Darstellung einer bekannten Drehzahlsensorschaltung mit einer Zweidraht-Stromschnittstelle.

In Fig. 1 bezeichnet Bezugszeichen Vbat eine Batteriespannung, 10 eine Spannungs-Modulations/Demodulationsschaltung, Vi eine Versorgungsspannung, L eine Spannungsversorgungsleitung, Rs einen Erfassungswiderstand, V_{R} eine Erfassungsspannung S einen Sensor mit intelligenter Schaltung, Is, Vs den Sensorstrom bzw. die Sensorspannung und GND Masse.

Fig. 2 zeigt eine schematische Darstellung einer weiteren bekannten Drehzahlsensorschaltung mit einer Dreidraht-Spannungsschnittstelle.

Bei dieser Schaltung nach Fig. 2 ist kein Erfassungswiderstand Rs vorgesehen, sondern eine Spannungserfassungsleitung Ls zusätzlich nach "außen" geführt.

Bei beiden Schaltungen ist der Sensor S mit der intelligenten Schaltung nach dem Einbau im Kraftfahrzeug nicht mehr zugänglich, sondern nur noch über die Versorgungsleitung L bzw. Spannungsausgangsleitung bzw. Masseleitung von außen "erreichbar".

Im folgenden wird ein Ausführungsbeispiel der Erfindung unter Bezugnahme auf die Schaltung nach Fig. 1 näher erläutert.

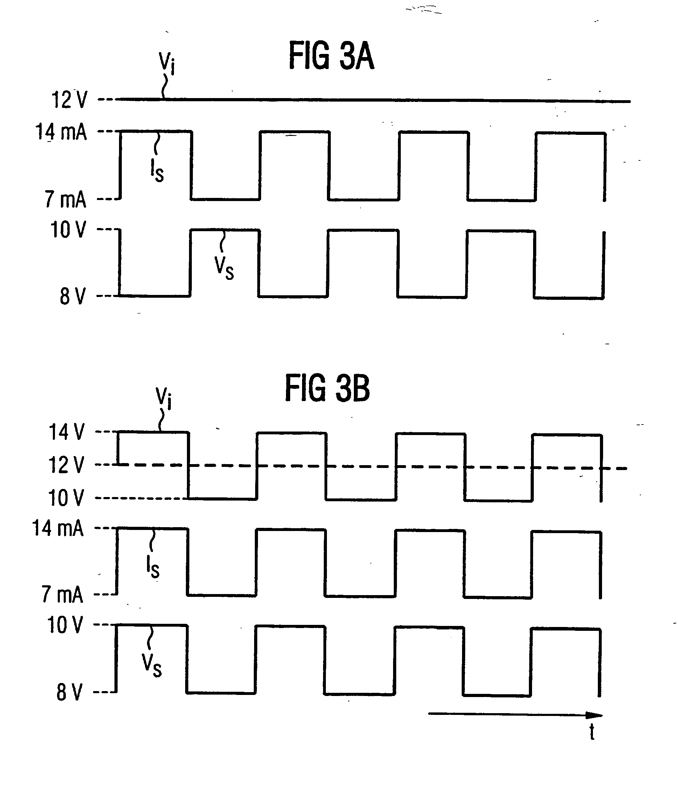

Fig. 3 zeigt eine zeitliche Darstellung von Signalgrößen der Schaltung nach Fig. 1, und zwar Fig. 3a) für den bekannten Meßmodus und Fig. 3b) zur Illustration der Umschaltung in den Kommunikationsmodus.

Es wird bei diesem Ausführungsbeispiel vorgeschlagen, zur Umschaltung in den Kommuinkationsmodus eine Spannungsversorgung zu wählen, die eine negative Widerstandscharakteristik besitzt. Der Betrieb stellt sich dann folgendermaßen dar.

Wenn der Sensor S ein sich drehendes Rad erkennt, so moduliert er seine Stromaufnahme entsprechend und liefert als Ausgangssignal aufeinanderfolgende logische L- und H-Signalimpulse, wobei dieser Erfassungszustand in Fig. 3a) dargestellt ist. Die Versorgungsspannung Vi ist im wesentlichen konstant, d.h. abgesehen von betriebsbedingten Fluktuationen, welche allerdings keine Folgen hinsichtlich des gewählten Modus haben sollen. Der Sensorstrom hat eine Rechteckform und schwankt zwischen 7 mA und 14 mA und entsprechend schwankt die Sensorspannung zwischen 8 V und 10 V.

Die Spannungsversorgung versorgt dabei den Sensor S bei einer hohen Stromaufnahme mit einer niedrigen Spannung und bei einer niedrigen Stromaufnahme mit einer hohen Spannung. Beide Versorgungsspannungen können durchaus im normalen Betriebsbereich liegen.

Zur Signalisierung einer gewünschten Kommunikation bzw. eines Kommunikationsmodus moduliert die Spannungs-Modulations/ Demodulationsschaltung 10 die Versorgungsspannung Vi, wie in Fig. 3b) dargestellt. Die Spannungsversorgung versorgt dabei den Sensor S bei einer hohen Stromaufnahme mit einer hohen Spannung und bei einer niedrigen Stromaufnahme mit einer niedrigen Spannung. Mit anderen Worten wird eine negative Widerstandscharakteristik vorgegeben bzw. eine Phasenverschiebung um 0° zwischen Sensorstrom Is und Sensorspannung Vs.

Wenn nun die intellegente Schaltung des Sensors S für eine gewisse Impulsanzahl (oder eine gewisse Zeit) diesen Zustand ununterbrochen erkennt, so schaltet sich der Sensor in den Testmodus bzw. Kommunikationsmodus. Da ein negativer Widerstand in realen Systemen normalerweise nicht vorkommt, ist das "versehentliche" Aktivieren des Kommunikationsmodus weitgehend verhindert.

Man kann dieses Prinzip noch verfeinern. Dadurch, daß man bestimmte Spannungspegel vorschreibt, die bei einer bestimmten Stromaufnahme vorliegen müssen, kann man die Störsicherheit noch erhöhen.

Man kann auch daran denken, daß man mehrere mögliche "tiefe" und "hohe" Versorgungsspannungen vorsieht, die in einer bestimmten Reihenfolge aktiviert werden müssen, um einen bestimmten Kommunikationsmodus zu aktivieren. Damit wäre sogar die Auswahl zwischen unterschiedlichen Kommunikationsmodi möglich.

Es ist dabei nicht wichtig, daß man einen konkreten Zahlenwert für den negativen Widerstand der Spannungsversorgung vorsieht. Im Gegenteil, es kann sogar nützlich sein, wenn dieser Zusammenhang nur diskret besteht (einem bestimmten Stromaufnahmebereich ist ein bestimmter Spannungswert zugeordnet), um die sich sonst ergebende Schwingungsgefahr zu verringern.

Wenn man nun in den Kommunikationsmodus gekommen ist, so muß das Sensorverhalten umgeschaltet werden. Es ist dabei möglich, interne Analogsignale, beispielsweise das (verstärkte) Sensoreingangssignal in einen Strom umzuformen und solcherma-ßen analog auszugeben. Weiters ist es natürlich auch möglich, das Datenprotokoll in einen bestimmten Kommunikationsbetrieb zu schalten und so wesentlich mehr Daten übertragen zu können als normal.

Folgende Vorgehensweise kann angewendet werden. Im Normalbetrieb arbeitet der Sensor S, wie bereits beschrieben, mit einem langsamen, störsicheren Protokoll; bestehend aus logischen "0"- und "1"- Informationen, die sich in der Stromaufnahme des Sensors gemäß Fig. 3a) wiederspiegeln. Der Sensor arbeitet dabei in einem weiten Betriebsspannungsbereich (z.B. 4.5 - 24 V). Wenn nun die Betriebsspannung im Zuge der hohen Stromaufnahme 9,5 V überschreitet und im Zuge der niedrigen Stromaufnahme 8,5 V unterschreitet (d.h. negativer Widerstand) und dieser Zustand über eine bestimmte Anzahl von Datenwechseln kontinuierlich anhält, dann schaltet sich der Sensor in den Kommunikationsmode. Die Zeit unmittelbar nach Umschaltung des Strompegels wird dabei ausgeblendet, um der Versorgungsspannungsquelle Zeit zu geben, den neuen Spannungspegel einzustellen. Wenn sich die Schaltung im Kommunikationsmode befindet, wird auf ein anderes Datenprotokoll umgeschaltet.

Um wieder in den Normalbetriebsfall zurückzukehren, gibt es folgende Möglichkeiten: Software-Reset per Datenprotokoll, Betriebsspannung ausschalten und einschalten oder eine Versorgungsspannung größer als 5V für eine gewisse Dauer (länger als 150 µs). Letztere Bedingung hat den Sinn, daß sich der Chip unter normalen Betriebsbedingungen (wo die Versorgungsspannung größer als 5 V ist) automatisch in den Normalbetrieb zurückschaltet. Das Datenprotokoll im Testmode ist nämlich so beschaffen, daß normalerweise Betriebsspannungen kleiner 5 V verwendet werden.

Das Kommunikations-Schnittstellenprotokoll funktioniert nun bei diesem Beispiel folgendermaßen: Die Defaultlage der Versorgungsspannung ist low (< 5 V). Wenn man nun ein Datenwort übertragen will, so sendet man eine Reihe von Pulsen. Eine logische 1 wird darin durch einen High-Puls mit 2/3 Periodendauer und einem Low-Puls mit 1/3 Periodendauer; eine logische 0 durch einen High-Puls mit 1/3 Periodendauer und einem Low-Puls mit 2/3 Periodendauer repräsentiert. Am Schluß wird noch ein Stopp-Bit gesendet, das das Ende der Übertragung signalisiert. Dabei ist die Dauer des High-Pulses unkritisch (1/3 oder 2/3 Periode), wichtig ist nur, daß der darauffolgende Low-Puls lange genug ist (> 1 Periode). Das ist das Signal, daß nun ein komplettes Wort übertragen wurde. Irgendwann kann dann eine neue Pulsfolge ausgesendet werden, die das nächste Wort repräsentiert.

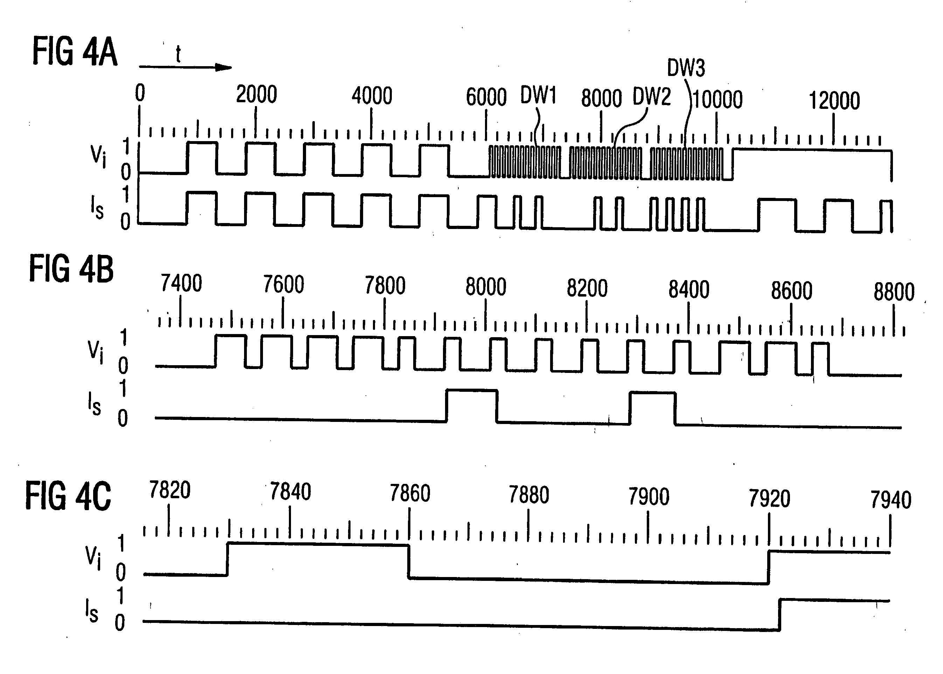

Fig. 4 zeigt eine Darstellung der übertragenen Signalimpulse als Funktion der Zeit t bei einer Ausführungsform des erfindungsgemäßen Verfahrens.

In Fig. 4 sieht man eine Simulation einer Impulsfolge, bei der
- vom Normalbetrieb in den Kommunikationsmodus geschaltet wird,
- Daten übertragen werden, und
- wieder in den Normalbetrieb zurückgeschaltet wird.

Das Signal Vi symbolisiert dabei den Wert der Versorgungsspannung der intelligenten Schaltung des Sensors S ("0" bedeutet unter 5 V, high bedeutet darüber bzw. um in den Kommunikationsmodus zu kommen sogar über 7 V). Das Signal Is steht für die Stromaufnahme des Sensors S (hohe bzw. niedrige Stromaufnahme, wie in Fig. 3 illustriert).

Zunächst einmal ist, wie in Fig. 4a) illustriert, die Schaltung im Normalmodus. Die Schaltung gibt nun im normalen Betrieb eine hohe oder niedrige Stromaufnahme Is aus. Als Reaktion darauf wird die Versorgungsspannung Vi auf einen hohen oder niedrigen Wert gesetzt. Mit der 6. Flanke von Is wird dann in den Kommunikationsmodus umgeschaltet. Danach folgt die Übertragung von 3 Datenworten DW1-3 . Schließlich wird die Versorgungsspannung Vi für längere Zeit wieder erhöht, was zu einer Rückkehr in den Normalmodus führt.

Fig. 4b) zeigt als Ausschnitt die Übertragung des zweiten Datenwortes DW2. Das Wort besteht aus 13 Datenbits und einem Stoppbit. Man kann erkennen, daß jeweils mit der steigenden Flanke von Vi ein neues Bit kommt. Weiterhin kann man erkennen, daß logische Einsen und Nullen übertragen werden.

Fig. 4c) zeigt nochmals in Ausschnittsvergrößerung die Übertragung eines Bits: Als Reaktion auf eine steigende Flanke in Vi wird ein Schiebetakt erzeugt (Bitgrenze). Von außen ist das dadurch erkennbar, daß mit einer gewissen Verzögerung ein neues Ausgangsbit erscheint.

Mittels dieser Technik ist es nun möglich, unbegrenzten Zugriff auf das Kommunikationsinterface des Sensor-Bausteins zu erhalten. Im konkreten Fall kann damit auf Register zugegriffen werden, die die aktuelle Größe des Magnetsignals beinhalten.

Weiterhin gibt es in der Schaltung auch Register, die minimale und maximale Magnetwerte abspeichern. Weiters gibt es Statusinformationen. Damit kann man nun das Magnetsignal auf digitalem Weg auslesen und den Sensor gewissermaßen als Meßmittel verwenden.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere ist, obwohl die obige Ausführungsform eine Zweidraht-Stromschnittstelle betrifft, die Erfindung selbstverständlich auch auf eine Dreidraht-Spannungsschnittstelle oder sonstige Schnittstellen anwendbar.

### Bezugszeichenliste:

- Vbat: Batteriespannung
- 10: Spannungs-Modulations/ Demodulationsschaltung
- Vi: Versorgungsspannung
- L: Spannungsversorgungsleitung
- Rs: Erfassungswiderstand
- V_{R}: Erfassungsspannung
- S: Sensor mit intelligenter Schaltung
- Is, Vs: Sensorstrom, Sensorspannung
- GND: Masse
- Ls: Spannungserfassungsleitung
- DW1-3: Datenworte

## Patentansprüche

1. Verfahren zur Kommunikation mit einem eingebauten Drehzahlsensor, der als Drehzahl-Ausgangssignal aufeinanderfolgende logische L- und H-Signalimpulse liefert, wobei der Drehzahlsensor (S) in einem Kraftfahrzeug derart eingebaut ist, daß er über eine Spannungsversorgungsleitung (L) mit einer Versorgungsspannung (Vi) von extern versorgbar ist, wobei der Sensor (S) im Normalbetrieb bei einer hohen Stromaufnahme mit einer niedrigen Spannung und bei einer niedrigen Stromaufnahme mit einer hohen Spannung versorgt wird, **gekennzeichnet durch** die Schritte:
Versetzen des Sensors (S) in einen Erfassungsmodus;
Vorsehen einer externen Modulation der Versorgungsspannung (Vi) auf der Spannungsversorgungsleitung (L);
Vergleichen der im Drehzahlsensor (S) empfangenen modulierten Versorgungsspannung (Vi) mit dem zugehörigen Sensorstrom (Is); und
Interpretieren der empfangenen modulierten Versorgungsspannung (Vi) als externes Kommunikationssignal, falls eine negative Widerstandscharakteristik festgestellt wird, bei der der Sensor (S) bei einer hohen Stromaufnahme mit einer hohen Spannung und bei einer niedrigen Stromaufnahme mit einer niedrigen Spannung versorgt wird.

2. Verfahren nach Anspruch 1, **dadurch gekennzeichnet, daß** der Drehzahlsensor (S) über eine Zweidraht-Stromschnittstelle von extern versorgbar ist.

3. Verfahren nach Anspruch 2, **dadurch gekennzeichnet, daß** der Drehzahlsensor (S) in einen Kommunikationsmodus schaltet, falls eine negative Widerstandscharakteristik über eine vorbestimmte Anzahl von Zyklen der L-/H-Signalimpulse festgestellt wird.

4. Verfahren nach Anspruch 3, **dadurch gekennzeichnet, daß** in dem Kommunikationsmodus jede Modulation der Versorgungsspannung (Vi) als externes Kommunikationssignal interpretiert wird, welche vorbestimmte Signaldauer und Signalgröße hat.

5. Verfahren nach Anspruch 4, **dadurch gekennzeichnet, daß** eine logische "1" einem H-Impuls mit 2/3 Periodendauer und einem L-Impuls mit 1/3 Periodendauer entspricht.

6. Verfahren nach Anspruch 4 oder 5, **dadurch gekennzeichnet, daß** eine logische "0" einem H-Impuls mit 1/3 Periodendauer und einem L-Impuls mit 2/3 Periodendauer entspricht.

7. Verfahren nach einem der vorhergehenden Ansprüche 3 bis 6, **dadurch gekennzeichnet, daß** der Drehzahlsensor (S) in dem Kommunikationsmodus Kommunikationssignale auf der Spannungsversorgungsleitung (L) nach extern sendet.

8. Verfahren nach einem der vorhergehenden Ansprüche, **dadurch gekennzeichnet, daß** die Versorgungsspannung (Vi) im Falle keiner Kommunikation im wesentlichen konstant gehalten wird.

9. Verfahren nach Anspruch 3, **dadurch gekennzeichnet, daß** der Drehzahlsensor (S) über eine Dreidraht-Spannungsschnittstelle von extern versorgbar ist.

10. Verfahren nach Anspruch 9, **dadurch gekennzeichnet, daß** der Drehzahlsensor (S) in dem Kommunikationsmodus Kommunikationssignale auf der Spannungsausgangsleitung (Ls) nach extern sendet.

## Claims

1. Method for communication with a built-in rotational speed sensor, which supplies successive rotational speed signal pulses as logic L and H output signal, the rotational speed sensor (S) being built into a motor vehicle in such a way that it can be supplied with a supply voltage (Vi) externally via a voltage supply line (L), the sensor (S) being supplied in normal operation with a low voltage in the case of a high current consumption and with a high voltage in the case of low current consumption, **characterized by** the steps of:
Putting the sensor (S) into a detection mode;
Providing an external modulation of the supply voltage (Vi) on the voltage supply line (L);
Comparing the modulated supply voltage (Vi) received in the rotational speed sensor (S) with the associated sensor current (Is); and
interpreting the received modulated supply voltage (Vi) as an external communication signal if a negative resistance characteristic is ascertained, in which the sensor (S) is supplied with a high voltage in the case of a high current consumption and with a low voltage in the case of a low current consumption.

2. Method according to Claim 1, **characterized in that** the rotational speed sensor (S) can be supplied externally via a two-wire current interface.

3. Method according to Claim 2, **characterized in that** the rotational speed sensor (S) switches into a communication mode if a negative resistance characteristic is ascertained over a predetermined number of cycles of the L/H signal pulses.

4. Method according to Claim 3, **characterized in that**, in the communication mode, each modulation of the supply voltage (Vi) which has a predetermined signal duration and signal magnitude is interpreted as an external communication signal.

5. Method according to Claim 4, **characterized in that** a logic "1" corresponds to an H pulse with 2/3 period duration and an L pulse with 1/3 period duration.

6. Method according to Claim 4 or 5, **characterized in that** a logic "0" corresponds to an H pulse with 1/3 period duration and an L pulse with 2/3 period duration.

7. Method according to one of the preceding Claims 3 to 6, **characterized in that**, in the communication mode, the rotational speed sensor (S) sends communication signals on the voltage supply line (L) to an external point.

8. Method according to one of the preceding claims, **characterized in that** the supply voltage (Vi) is kept essentially constant in the case of no communication.

9. Method according to Claim 3, **characterized in that** the rotational speed sensor (S) can be supplied externally via a three-wire voltage interface.

10. Method according to Claim 9, **characterized in that**, in the communication mode, the rotational speed sensor (S) sends communication signals on the voltage output line (Ls) to an external point.

## Revendications

1. Procédé de communication avec un capteur intégré de vitesse de rotation, qui fournit comme signal de sortie de vitesse de rotation des impulsions de signal logiques L et H qui se succèdent, le capteur (S) de vitesse de rotation étant intégré à un véhicule automobile de façon à pouvoir être alimenté de l'extérieur en une tension (Vi) d'alimentation par l'intermédiaire d'une ligne (L) d'alimentation en tension, le capteur (S) étant alimenté en marche normale, lorsque l'absorption de courant est grande, en une tension basse et, lorsque l'absorption de courant est petite, en une tension haute, **caractérisé par** les stades :
- on met le capteur (S) dans un mode de détection;
- on prévoit une modulation extérieure de la tension (Vi) de l'alimentation sur la ligne (L) d'alimentation en tension ;
- on compare la tension (Vi) d'alimentation modulée reçue dans le capteur (S) de vitesse de rotation au courant (Is) de capteur associé ; et
- on interprète la tension (Vi) d'alimentation modulée reçue comme signal de communication extérieure si l'on constate une caractéristique de résistance négative, pour laquelle le capteur (S) est alimenté, lorsque l'absorption du courant est grande, en une tension haute et, lorsque l'absorption de courant est petite, en une tension basse.

2. Procédé suivant la revendication 1, **caractérisé en ce que** l'on peut alimenter de l'extérieur le capteur (S) de vitesse de rotation par une interface de courant à deux fils.

3. Procédé suivant la revendication 2, **caractérisé en ce que** l'on branche le capteur (S) de vitesse de rotation dans un mode de communication, si l'on constate une caractéristique de résistance négative sur un nombre déterminé de cycles des impulsions de signal L/H.

4. Procédé suivant la revendication 3, **caractérisé en ce que** dans le mode de communication, on interprète chaque modulation de la tension (Vi) d'alimentation comme un signal extérieur de communication qui a une durée de signal et une grandeur de signal déterminées à l'avance.

5. Procédé suivant la revendication 3, **caractérisé en ce qu'** "1" logique correspond à une impulsion H ayant une durée de période de 2/3 et à une impulsion L ayant une durée de période de 1/3.

6. Procédé suivant la revendication 4 ou 5, **caractérisé en ce qu'**un "0" logique correspond à une impulsion H ayant une durée de 1/3 et à une impulsion L ayant une durée de période de 2/3.

7. Procédé suivant l'une des revendications 3 à 6, **caractérisé en ce que** le capteur (S) de vitesse de rotation émet vers l'extérieur, dans le mode de communication, des signaux de communication sur la ligne (L) d'alimentation en tension.

8. Procédé suivant l'une des revendications précédentes, **caractérisé en ce que** l'on maintient sensiblement constante la tension (Vi) d'alimentation dans le cas où il n'y a pas de communication.

9. Procédé suivant la revendication 3, **caractérisé en ce que** l'on peut alimenter de l'extérieur le capteur (S) de vitesse de rotation par une interface de tension à trois fils.

10. Procédé suivant la revendication 9, **caractérisé en ce que** le capteur (S) de vitesse de rotation émet vers l'extérieur, dans le mode de communication, des signaux de communication sur la ligne (Ls) de sortie de tension.
